# EUROPÄISCHE PATENTSCHRIFT

(11) **EP 0 671 818 B1**
(45) Veröffentlichungstag und Bekanntmachung des Hinweises auf die Patenterteilung: **30.11.2005**
(21) Anmeldenummer: 94810143.1
(22) Anmeldetag: 07.03.1994
(51) Int. Cl.: H04B 1/28, H04R 25/00

(54) **Miniaturempfänger zum Empfangen eines hochfrequenten frequenz- oder phasenmodulierten Signales**
Miniature receiver for reception of frequency or phase modulated RF signals
Récepteur miniature pour la réception des signaux radiofréquence modulés en fréquence ou en phase

(43) Veröffentlichungstag der Anmeldung: 13.09.1995
(73) Patentinhaber: PHONAK COMMUNICATIONS AG, 1796 Courgevaux (CH)
(72) Erfinder: Bärtschi, Anton, CH-1713 St. Antoni (CH); Callias, François, CH-2000 Neuenburg (CH)
(74) Vertreter: BOVARD AG

(56) Entgegenhaltungen:
- DE-A- 3 032 311
- DE-A- 3 826 294
- ELECTRONIC COMPONENTS & APPLICATIONS, Bd.5, Nr.3, Juni 1983, EINDHOVEN,NL Seiten 159 - 170 VAN DOOREMOLEN ET AL 'A Complete FM Radio on a Chip'
- IEEE JOURNAL OF SOLID STATE CIRCUITS, Bd.SC-21, Nr.6, Dezember 1986, NEW YORK,US Seiten 916 - 923 SONG ET AL 'A CMOS Double Heterodyne FM Receiver'

## Beschreibung

Die vorliegende Erfindung bezieht sich auf einen Miniaturempfänger zum Empfangen eines hochfrequenten frequenz- oder phasenmodulierten Signales, wobei der Empfänger wenigstens die Module Oszillator, Mischstufe, die zum Mischen des der Mischstufe zugeführten hochfrequenten modulierten Signales mit einem vom Oszillator erzeugten Signal und zum Generieren eines Zwischenfrequenzsignales bestimmt ist, Zwischenfrequenzteil, Demodulator sowie Niederfrequenzverstärker, an dem ein niederfrequentes Signal ausgebbar ist, umfasst und wobei eine elektrische Quelle zum Versorgen der oben genannten Module mit elektrischer Energie vorhanden ist.

Mit der Bezeichnung TDA 7000 ist von der Firma Philips ein integrierter Schaltkreis zum Herstellen eines miniaturisierten Empfängers zum Empfangen eines hochfrequenten frequenzmodulierten Signales bekannt geworden. Wegen der dazu geforderten Betriebsspannung von typisch 4,5 Volt und der relativ grossen Stromaufnahme dieses integrierten Schaltkreises von etwa 8 mA eignet sich dieser Baustein schon wegen der relativ grossen erforderlichen Batterie nicht dazu, einen extrem miniaturisierten FM-Empfänger zu bauen. Im weiteren verhindern dies auch die relativ grosse Zahl von über 20 externen Bauteilen, die zum Herstellen eines Empfängers zusätzlich zum integrierten Schaltkreis notwendig sind. Dies kommt insbesondere daher, dass der genannte integrierte Schaltkreis in reiner bipolarer Technologie aufgebaut ist. Diese Technologie schliesst die Möglichkeit, Kondensatoren zu integrieren, praktisch aus, wodurch unter anderem das Erstellen von vollständig integrierten Zwischenfrequenzfilteranordnungen und Niederfrequenzfiltern nicht gegeben ist. Eine detailliertere Beschreibung des TDA 7000 kann zum Beispiel dem Artikel "A complete f.m. radio on a chip", W.H.A. Van Dooremolen und M. Hufschmidt aus Electronic Components & Applications Vol. 5(1983), No. 3, Eindhoven, Nederland, p. 159-170 entnommen werden.

Es ist deshalb die Aufgabe der vorliegenden Erfindung, zu versuchen, eine weitergehende Miniaturisierung bzw. eine extreme Miniaturisierung eines Empfängers zum Empfangen eines hochfrequenten frequenz- oder phasenmodulierten Signales zu erreichen, als dies mit der Verwendung des oben genannten integrierten Schaltkreises bisher möglich war. Das Ziel der Erfindung ist es, einen Empfänger der eingangs genannten Gattung derart klein zu bauen, dass er, mit einer Energiequelle und einem ein akustisches Signal erzeugenden Organ, beispielsweise im Gehörgang einer Person untergebracht werden kann.

Erfindungsgemäss wird diese Aufgabe dadurch gelöst, dass wenigstens die zum Herstellen eines FM-Empfängers notwendigen Module Oszillator, Mischstufe, Zwischenfrequenzfilteranordnung, Demodulator und Niederfrequenzverstärker in höchstens zwei integrierten Schaltkreisen enthalten sind und dass die elektrische Energiequelle eine einzellige Batterie oder ein einzelliger Akkumulator ist.

Bei der Entwicklung der Schaltungen für die obengenannten Module und bei der Wahl der Integrationstechnologie für die einzelnen Module ist man davon ausgegangen, dass zum Betreiben der Module nur eine einzige Batterie- oder Akkumulatorenzelle notwendig ist, d.h., dass die Module mit einer Spannung von höchstens 1,8 V und mindestens 1,0 V betrieben werden können. Durch die Auslegung der Schaltungen zusätzlich in einer äusserst stromsparenden Technik hat man die Stromaufnahme des gesamten Empfängers in einen Bereich von etwa 1 mA reduzieren können. Die niedrige Betriebsspannung von typischerweise etwa 1,3 V und die kleine Stromaufnahme ermöglichen es, eine einzige Hörgerätebatterie zum Betreiben des Empfängers vorzusehen. Eine ausreichend lange Betriebsdauer des Empfängers für die weiter hinten genannten Anwendungen wird damit erreicht.

Mindestens ein Teil der Schaltungen der Empfängermodule ist in CMOS-Technologie ausgeführt worden. Dies, weil mit dieser Technologie Transistoren mit kleinen Schwellenspannungen und Kondensatoren mit relativ grossen Kapazitäten integrierbar sind. Diese Vorteile hat man genutzt, um vor allem Module, die in einem niedrigen Frequenzbereich arbeiten, in dieser Technologie zu integrieren. Durch die Wahl einer relativ tiefen Zwischenfrequenz (siehe weiter hinten) ist es möglich geworden, auch den gesamten Zwischenfrequenzteil, umfassend Zwischenfrequenzfilter und Zwischenfrequenzverstärker, ohne das Vorhandensein auch nur eines einzigen externen Bauelementes vollständig zu integrieren. Die in einem hohen Frequenzbereich arbeitenden Module, wie Hochfrequenzverstärker, Oszillator und Mischstufe, hat man in bipolarer Technologie integriert. Infolge der hohen in diesen Modulen zu verarbeitenden Frequenzen, die im vorliegenden Fall zwischen etwa 30 und etwa 200 MHz liegen, hat man die bipolare Technologie gewählt, weil Bauelemente, hergestellt in CMOS-Technik, für solche Anwendungen zu langsam sind. Damit sich die bei der bipolaren Technologie höheren Schwellenspannungen der Transistoren nicht nachteilig auswirken, ist zusätzlich eine Spannungsvervielfacherschaltung integriert worden, um die in bipolarer Technologie erstellten Module mit einer intern in der integrierten Schaltung erzeugten höheren Betriebsspannung zu speisen.

Auf den höchstens zwei integrierten Schaltkreisen sind vorzugsweise ebenfalls ein Tiefpassfiltermodul und ein Muting- bzw. Squelchmodul vorhanden.

Eine bevorzugte Ausführung sieht vor, dass sämtliche der bereits genannten Module, auf deren Funktionsweise weiter hinten eingegangen wird, in einer einzigen integrierten Schaltung enthalten sind. Diese einzige integrierte Schaltung ist in BiCMOS-Technik ausgeführt.

Dem Empfänger zugeordnet ist ebenfalls eine Spule zum Bilden einer magnetisch wirkenden Antenne. Es ist vorzugsweise jedoch vorgesehen, damit auch schwächere Signale empfangen werden können, eine elektrisch wirkende Draht-, Stab- oder Spulenantenne zusätzlich an den Empfänger anzukoppeln. Eine bevorzugte Ausführung sieht eine umschaltbare Anordnung der beiden Antennen insbesondere in dem Sinne vor, dass beim Anschliessen der elektrisch wirkenden Antenne, die magnetisch wirkende Antenne unwirksam wird.

Das Anpassen der Betriebsart zum Empfangen eines hochfrequenten frequenzmodulierten oder hochfrequenten phasenmodulierten Signales kann mit einer manuell einsetzbaren Kurzschlussbrücke vollzogen werden.

Das Muting- oder Squelchmodul überwacht die Grösse des empfangenen verstärkten und demodulierten Signales. Ist dieses Niederfrequenzsignal kleiner als ein bestimmter vorgegebener Wert, wird automatisch die Bandbreite des Tiefpassfilters reduziert, wodurch sich für kleine Signale ein besseres Signal-Rausch-Verhältnis ergibt. Beim Fehlen oder bei einem unbrauchbar kleinen Niederfrequenzsignal wird der Niederfrequenzverstärker ausgeschaltet.

Dank dem, dass es möglich geworden ist, einen extrem hohen Integrationsgrad für alle die vorgenannten Module zu erzielen, dass die Anzahl an zusätzlich benötigten externen Bauelementen, die vorzugsweise alle für Oberflächenmontagetechnik (SMD-Technik) ausgeführt sind, auf etwa die Hälfte gegenüber dem eingangs genannten Stand der Technik haben reduziert werden können und dass der Betrieb des Empfängers mit einer einzigen Hörgerätebatterie möglich geworden ist, hat man ein Empfängervolumen erreicht, das inklusive aller oben genannten Teile kleiner als 1 cm³ ist. Dadurch ist es möglich geworden, den Empfänger in einem Gehäuse einzusetzen, das dem eines in dem Ohr zu tragenden Hörgerätes gleichzusetzen ist und in dem zusätzlich zum Empfänger noch ein Hörer zum Abgeben eines akustischen Signales eingebaut ist. Ein solcher Empfänger lässt sich in den Gehörgang einer Person einsetzen und ist geeignet, beispielsweise bei einem Katastropheneinsatz einzelne Katastrophenhelfer koordiniert von einer oder mehreren Zentralstellen zu leiten, dies ohne dass die Katastrophenhelfer ein Funkgerät umgehängt mittragen und eine Hand zum Bedienen des Funkgerätes blockiert haben.

Ein andersartiger Einsatz kann beispielsweise so gestaltet sein, dass ein Trainer bei Trainings oder Sportanlässen von einem Spielfeldrand die Spielzüge seiner Spieler leitet.

Bei Hörgeräten ist es bekannt, dass sie neben einem Mikrofon auch eine sogenannte Induktionsspule aufweisen, wobei mittels einem Schalter von einem Mikrofonempfang auf einen Induktionsspulenempfang umgeschaltet werden kann. Der Induktionsspulenempfang dient vor allem dazu, dass ein Hörgeräteträger bestimmte Anlässe, beispielsweise kirchliche Anlässe, ohne das Vorhandensein von vom Mikrofon ebenfalls aufgenommenen störenden Umweltgeräuschen verfolgen kann. Das Verlegen von Induktionsschleifen in Gebäuden ist relativ aufwendig und daher eher selten ausgeführt. Nachteilig für den Hörgeräteträger ist, dass er während dem Induktionsspulenempfang die übrigen Mitmenschen akustisch kaum mehr wahrnehmen kann.

Mit dem erfindungsgemässen Empfänger erschliesst sich auch hier ein neues Anwendungsgebiet, nämlich dann, wenn der Empfänger so ausgeführt ist, dass er beispielsweise als Zusatz an ein Hörgerät angekoppelt werden kann. Funktionell muss die Kupplung sowohl mechanisch als auch elektrisch erfolgen. Es ist jedoch nicht erforderlich, dass im Empfängerzusatz ein Hörer und eine Batterie untergebracht sind, denn diese Teile sind im Hörgerät bereits vorhanden. Bei diesem Einsatz des erfindungsgemässen Empfängers wird vor allem an ein hinter dem Ohr zu tragendes Hörgerät oder an eine Hörbrille gedacht.

Weitere Anwendungen für einen als Zusatz zu einem Hörgerät gebauten Empfänger sind beispielsweise in Schulen für schwerhörige Kinder sowie im Bereich hörgerätetragender Personen vorhanden. In Schwerhörigenschulen können die Schüler den Lehrer deutlich und klar hören. Die bisher verwendeten, etwa der Grösse einer Zigarettenschachtel entsprechenden verwendeten Empfänger, die um die Taille gegurtet getragen werden und die mittels Kabel mit dem Hörgerät eines Schülers verbunden sind, können ersetzt werden. Der Schüler fühlt sich dadurch freier. Im privaten Bereich kann der Empfängerzusatz zum Hören des Fernsehtones, des Tones der Stereoanlage, des Telefones oder der Klingel benutzt werden. Kleine örtlich angebrachte Sender sind dazu zusätzlich erforderlich.

Die bereits genannte elektrisch wirkende Antenne soll in beiden genannten Ausführungen vorzugsweise von aussen an den im Gehäuse untergebrachten Empfänger angeschaltet werden können. Optisch sieht das dann so aus, dass beispielsweise ein kurzer flexibler Draht aus dem Gehörgang, in dem der Empfänger getragen wird, herausragt, oder dass vom Hörgerät ein einige Zentimeter langer Draht herunterhängt, was absolut nicht störbar ist. Die dem Empfänger zugeordnete magnetisch wirkende Antenne wird dabei ausgeschaltet. In der integrierten Schaltung ist vorzugsweise ebenfalls ein Standby-Stromkreis vorgesehen, welcher lediglich beim Einsatz des Empfängers als Zusatz zu einem Hörgerät in Funktion tritt. Er erlaubt das Ein- und Ausschalten des Empfängers simultan mit dem Ein- und Ausschalten des Hörgerätes.

Anhand von Figuren sind bevorzugte Ausführungsformen des erfindungsgemässen Miniaturempfängers nachstehend beispielsweise beschrieben. Es zeigen
**Fig. 1** blockschaltbildmässig den Aufbau des integrierten Schaltkreises für den Empfänger,
**Fig. 2** die Beschaltung des integrierten Schaltkreises gemäss der Fig. 1 mit externen Bauelementen zum Realisieren eines im Gehörgang einer Person zu tragenden Empfängers,
**Fig. 3** einen Vorschlag für die konstruktive Anordnung der einzelnen Bauteile zur Realisierung eines im Gehörgang einer Person zu tragenden Empfängers,
**Fig. 4** die Beschaltung des integrierten Schaltkreises gemäss der Fig. 1 mit externen Bauelementen zum Realisieren eines Zusatzes zu einem hinter dem Ohr zu tragenden Hörgerät, und
**Fig. 5** einen Vorschlag für die konstruktive Anordnung des Empfängers als Zusatz zu einem Hörgerät.

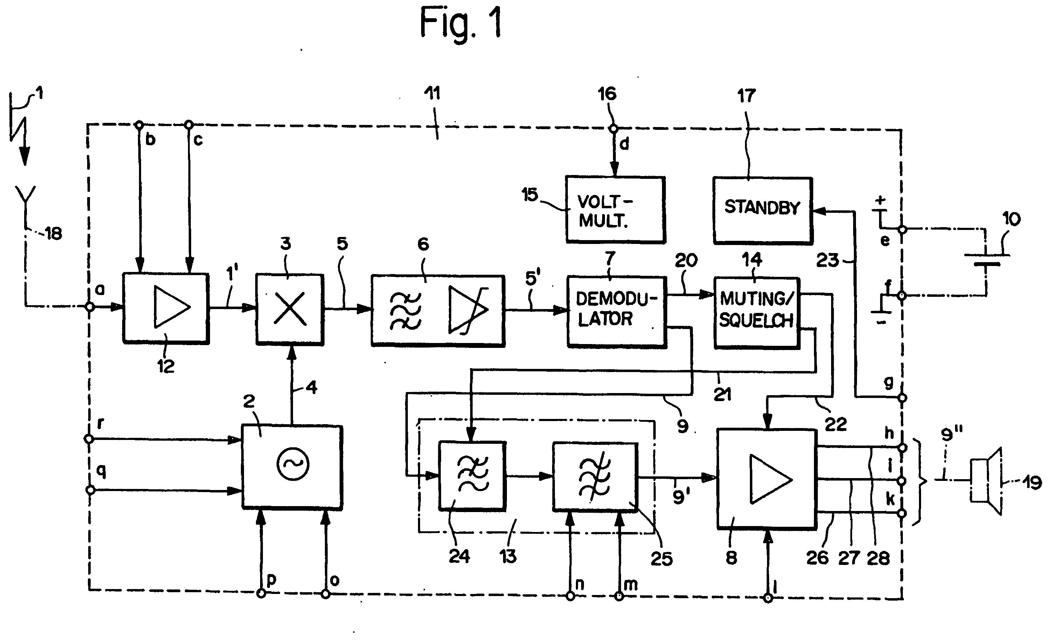

In der Fig. 1 ist ein integrierter Schaltkreis 11 gezeigt, der zum Herstellen eines Miniaturempfängers zum Empfangen eines hochfrequenten Signales 1, das frequenz- oder phasenmoduliert ist, bestimmt ist. Der integrierte Schaltkreis 11 umfasst Anschlusspunkte 16, die mit a bis r bezeichnet sind und welche mit weiteren Bauelementen verbunden sind, die auf einer in dieser Figur nicht sichtbaren Leiterplatte, vorzugsweise in SMD-Technik (Surface-Mounted-Device), montiert sind.

Der integrierte Schaltkreis 11 ist in BiCMOS-Technologie ausgeführt. Bipolare Transistoren in Verbindung mit integrierten Widerständen und externen Induktivitäten und Kapazitäten werden verwendet, um Stromkreise, die hohe Frequenzen verarbeiten, zu realisieren. Transistoren in CMOS-Technologie sind dazu vorgesehen, um die Bereiche der Schaltung zu realisieren, die in einem mittleren oder niedrigen Frequenzbereich arbeiten, beispielsweise die Stromkreise zum Filtern und Verstärken eines Zwischenfrequenzsignales und eines Niederfrequenzsignales. Die CMOS-Technologie erlaubt im übrigen die Integration von Kondensatoren mit einer pro Oberflächeneinheit respektablen Kapazität, welche dazu geeignet sind, sowohl integrierte RC-Filter als auch integrierte Filter mit geschalteten Kapazitäten (Switchet capaciter) herzustellen.

Im gezeigten Ausführungsbeispiel umfasst der integrierte Schaltkreis 11 einen Hochfrequenzverstärker 12, der zum Vorverstärken des hochfrequenten Signales 1 bestimmt ist, welches über eine Antenne 18, die mit dem Anschlusspunkt a verbunden ist, empfangen wird. Der Hochfrequenzverstärker 12 ist als selektiver Verstärker ausgeführt. Die Mittel zur Frequenzselektion sind als externe Bauelemente vorhanden. Eine Induktivität und eine Kapazität, welche an die Anschlusspunkte b und c geschaltet sind, sind dazu vorgesehen. Das vorverstärkte und vorgefilterte hochfrequente Signal 1' gelangt zu einer Mischstufe 3. An diese ist ebenfalls ein Oszillatorsignal 4 geschaltet, welches von einem quarzgesteuerten Oszillator 2 erzeugt wird. Zum Betrieb des Oszillators sind weitere externe Bauelemente, wie ein Quarz, Spulen und Kapazitäten notwendig, die mit den Anschlusspunkten o, p, q und r verbunden sind.

In der Mischstufe 3 wird das Produkt der beiden zugeführten Signale, des hochfrequenten Signales 1' und des vom Oszillator 2 abgegebenen Signales 4 gebildet. Dieses in der Mischstufe erzeugte Signal 5 hat ein Frequenzspektrum der Form Oszillatorfrequenz ± hochfrequentes Signal, dreimal die Oszillatorfrequenz ± hochfrequentes Signal, fünfmal die Oszillatorfrequenz ± hochfrequentes Signal, etc. Dieses Signal 5 wird einem Zwischenfrequenzteil 6, welcher Zwischenfrequenzfilter (RC-Filter) und Zwischenfrequenzverstärker umfasst, zugeführt. Im Zwischenfrequenzteil 6 findet eine selektive Verstärkung des Mischproduktes, Oszillatorfrequenz minus hochfrequentes Signal statt. Dieses Mischprodukt ist als Zwischenfrequenz 5' bezeichnet. Damit der Zwischenfrequenzteil mit seinen Kapazitäten, Widerständen und Transistoren vollständig integrierbar ist, ist es erforderlich, dass er in CMOS-Technologie ausgeführt werden kann. Da Transistoren in dieser Technologie, wie einleitend bereits gesagt, für höhere Frequenzen nicht geeignet sind, hat man die Oszillatorfrequenz so gewählt, dass das Zwischenfrequenzsignal lediglich eine Frequenz aufweist, die zwischen 15 und 50 kHz liegt. Durch die Anwendung der CMOS-Technologie und die Wahl der tiefen Zwischenfrequenz hat man zusätzlich den Vorteil erreicht, dass die Stromaufnahme des Zwischenfrequenzteiles äusserst gering ist.

Der erfindungsgemässe Empfänger ist als Ueberlagerungsempfänger mit einer einfachen Umsetzung des empfangenen Signales auf das Zwischenfrequenzsignal mit der sehr tief gewählten Zwischenfrequenz aufgebaut.

Wegen der niedrigen Zwischenfrequenz sind die Frequenzen des hochfrequenten, zum Empfang vorgesehenen Signales und des hochfrequenten Signales mit der Spiegelfrequenz sehr nahe beieinander. Der Empfang eines hochfrequenten Signales mit der Spiegelfrequenz kann einerseits mit einem selektiv ausgeführten Hochfrequenzverstärker und andererseits mit einer selektiven Antenne verhindert werden. Bei der vorliegenden Ausführung hat man auf eine vollständige Abweisung des hochfrequenten Signales mit der Spiegelfrequenz verzichtet, weil durch die Wahl der sehr tiefen Zwischenfrequenz und durch eine lediglich schwache Selektivität des Hochfrequenzverstärkers das Schwergewicht der Schaltungsauslegung auf den geringen Stromkonsum und auf das kleinstmögliche Volumen des zu realisierenden Empfängers (wenige externe Bauteile) gelegt worden sind. Um den Verlust durch die geringe Selektivität zu kompensieren, ist der Abstand empfangener Nutzkanäle gross gewählt worden.

Das Zwischenfrequenzsignal 5' wird einem Demodulator 7 zugeführt, in welchem aus dem Zwischenfrequenzsignal ein niederfrequentes Signal 9 gewonnen wird. Dieses niederfrequente Signal 9 wird einer Tiefpassfilteranordnung 13 zugeführt, welche ein Tiefpassfilter 24 umfasst und ein Klangkorrekturglied 25 aufweist. Das gefilterte und eventuell klangkorrigierte Niederfrequenzsignal gelangt von der Tiefpassfilteranordnung 13 an einen Niederfrequenzverstärker 8. Dieser ist als Ausgangsverstärker für das niederfrequente Signal konzipiert, umfasst einen Anschlusspunkt I, an welchen ein externer einstellbarer Widerstand oder ein schaltbares Widerstandsnetzwerk zum Einstellen der Lautstärke anschliessbar ist. Drei verschiedenartige Ausgänge 26, 27, 28 des Ausgangsverstärkers enden an Anschlusspunkten h, i, k des integrierten Schaltkreises 11. Je nach Anwendung und Einsatz der integrierten Schaltung wird ein Organ 19 zum Erzeugen eines akustischen Signales, beispielsweise ein elektromagnetischer Hörer, wie später umfassend beschrieben, an einen der drei genannten Anschlusspunkte geschaltet. Ein verstärktes niederfrequentes Signal 9'' wird diesem Hörer 19 zugeführt.

Der Demodulator 7 liefert ebenfalls ein Referenzsignal 20 an für ein Muting- oder Squelch-Modul 14, welches über Verbindungen 21, 22 das Tiefpassfilter 24 und den Niederfrequenzverstärker 8 steuert. Wenn kein hochfrequentes Signal empfangen wird oder wenn das Signal-Rausch-Verhältnis des niederfrequenten Signales zu niedrig ist, beispielsweise bei einem sehr schwachen Empfang, wird der Niederfrequenzverstärker 14 über die Verbindung 22 ausgeschaltet. Diese Funktion ist als Squelch- oder Rauschsperre bei FM-Empfängern sehr wohl bekannt. Im vorliegenden Ausführungsbeispiel ist die Ausschaltschwelle des Squelch fest vorgegeben.

Wenn ein empfangenes Signal schwächer wird, wobei das Signal-Rausch-Verhältnis des niederfrequenten Signales 9 kleiner wird, tritt eine Muting- oder Rauschdämpfungsfunktion des Muting- oder Squelch-Modules 14 in Kraft, durch welche über die Verbindung 21 die Durchlassbreite des Tiefpassfilters 24 reduziert wird, wodurch das Signal-Rausch-Verhältnis ansteigt und die Empfindlichkeit des Empfängers verbessert wird.

Das Klangkorrekturglied 25 ist mit den zwei Anschlusspunkten n, m des integrierten Schaltkreises 11 verbunden. Wenn keiner der beiden genannten Anschlusspunkte mit einem Schaltungsnullpunkt verbunden ist, ist die Wiedergabekurve des Klangkorrekturgliedes flach. Wenn der Anschlusspunkt n mit dem Schaltungsnullpunkt verbunden ist, was beispielsweise mit einem Jumper J1 oder einem ähnlichen Mittel, wie einer gewöhnlichen Drahtbrücke geschehen kann, erhält das Klangkorrekturglied die Funktion eines Bandpasses ersten Ranges mit einer unteren Grenzfrequenz von ungefähr 200 Hz, wodurch ein korrekter Empfang eines phasenmodulierten Signales gewährleistet wird. Bei offenem Anschlusspunkt n ist der Empfänger zum Empfangen eines frequenzmodulierten Signales eingestellt.

Wenn der Anschlusspunkt m (Jumper J2) mit dem Schaltungsnullpunkt verbunden wird, erhält das Klangkorrekturglied die Funktion eines Bandpasses mit Grenzfrequenzen bei etwa 160 Hz und etwa 1'600 Hz, was erlaubt, den Frequenzgang eines Richtmikrophones eines Hörgerätes nachzubilden. Bei der Anwendung des Empfängers als Zusatz zu einem Hörgerät ist dies wichtig, da dadurch erreicht werden kann, dass das Klangbild des Hörgerätes nicht ändert, wenn es anstelle von akustischen Signalen über das Richtmikrophon ein aus dem hochfrequenten Signal demoduliertes Signal erhält. Bei einem Hörgerät, das mit einem Mikrophon ohne ausgeprägte Richtcharakteristik ausgerüstet ist, ist die Wiedergabekurve des Mikrophones flach.

Der Frequenzgang eines solchen Mikrophones kann mit dem Klangkorrekturglied 25 durch Trennen des Anschlusses m vom Schaltungsnullpunkt nachgebildet werden.

Ein Spannungsvervielfacherstromkreis 15, an den über den Anschlusspunkt d ein externer Entkopplungskondensator angeschlossen ist, ist dazu vorgesehen, ausgehend von der an den integrierten Schaltkreis 11 zwischen den Anschlusspunkten e, f angelegten Spannung einer einzelligen Batterie 10 oder eines einzelligen Akkumulators 10 eine höhere Spannung zu erzeugen, um diejenigen genannten Module des integrierten Schaltkreises, die eine minimale Betriebsspannung benötigen, die grösser als 1 V ist (beispielsweise Hochfrequenzverstärker 12), mit elektrischer Energie zu versorgen.

Ein Standby-Stromkreis 17 vervollständigt den integrierten Schaltkreis 11 in dem Sinne, dass eine am Anschlusspunkt g angelegte Spannung über eine Steuersignalverbindung 23 ständig überwacht wird. Bei einer kleinen oder fehlenden überwachten Spannung sorgt der Standby-Stromkreis 17 für ein Ausschalten des Empfängerstromkreises, bis auf einen vom Standby-Stromkreis selbst konsumierten äusserst kleinen Reststrom. Beim Wiederauftreten oder beim Grösserwerden der überwachten Spannung schaltet der Standby-Stromkreis 17 den Empfänger auf Normalbetrieb. Als überwachte Spannung kann beispielsweise die Speisespannung eines Mikrophones von einem Hörgerät in Frage kommen, wodurch beim Ausschalten des Hörgerätes der erfindungsgemässe Empfänger, der in diesem Fall mit dem Hörgerät gekoppelt ist, auf den Standby-Betrieb geschaltet wird.

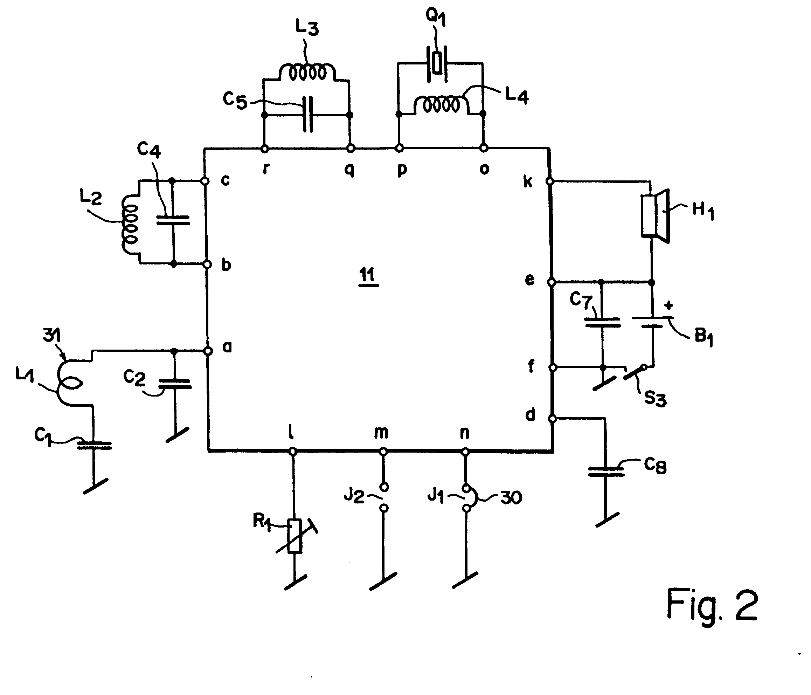

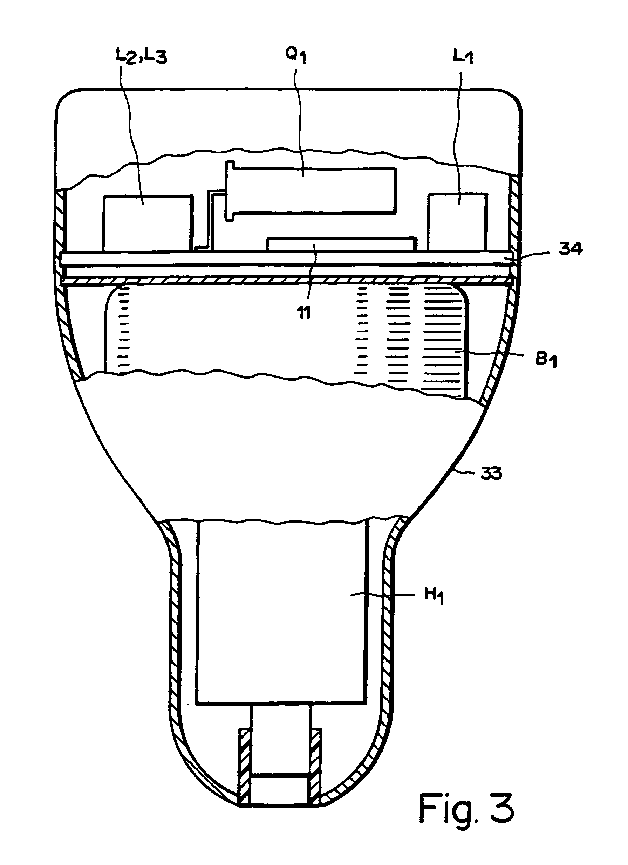

In der Fig. 2 ist eine elektronische Schaltung mit dem vorher beschriebenen integrierten Schaltkreis 11 gezeigt, welche geeignet ist, einen vollständigen FM-Empfänger mit einem totalen Volumen von weniger als 1 cm³ zu realisieren. Sämtliche in der Fig. 2 gezeigten externen Bauelemente, wie Kapazitäten Cn, Induktivitäten Ln, die Jumper J1, J2, der Widerstand R1, der Quarz Q1, die Batterie B1 sowie der Hörer H1 sind dabei im genannten Volumen eingeschlossen. Ein derartiger Miniaturempfänger kann, wenn er in einem Gehäuse 33 (Fig. 3) untergebracht ist, in einem Gehörgang von Personen unsichtbar getragen werden.

An den Anschlusspunkt a des integrierten Schaltkreises 11 ist eine magnetisch wirkende Antenne 31 angeschaltet. Die Antenne umfasst eine Spule L1, dessen eines Ende mit dem Anschlusspunkt a verbunden ist und dessen anderes Ende mit einer Kapazität C1 in Serie geschaltet ist, dessen anderer Anschluss an den Schaltungsnullpunkt geführt ist. Parallel zur genannten Serieschaltung ist ein Anpasskondensator C2 geschaltet. Die magnetisch wirkende Antenne 31 ist an einen Radioempfänger, der im Gehörgang einer Person getragen wird, angepasst. Der menschliche Körper stellt einen elektrischen Leiter dar, an dessen Oberfläche die auftreffenden Radiowellen hochfrequente Ströme induzieren, welche ihrerseits unmittelbar benachbart zur Haut des Körpers ein hochfrequentes magnetisches Feld erzeugen, das stärker ist als dasjenige, das die auftreffenden Wellen selbst beinhalten. Der menschliche Körper wirkt dabei als eine Empfangsantenne, an welche die oben beschriebene magnetisch wirkende Antenne gekoppelt ist.

Die Spule L2 und der Kondensator C4, welche einen Parallelschwingkreis darstellen, sind an die Anschlusspunkte b, c des integrierten Schaltkreises geschaltet und sind für die Selektivität des Hochfrequenzverstärkers verantwortlich. Die Spulen L3, L4, die Kapazität C5 und der Quarz Q1 sind über die Anschlusspunkte o, p, q und r mit dem Oszillatorstromkreis des integrierten Schaltkreises 11 verbunden und erzeugen zusammen mit dem letzteren die bereits genannte Oszillatorfrequenz. Die Batterie B1 ist über einen Schalter S3 mit den Anschlusspunkten e, f des integrierten Schaltkreises 11 verbunden. Ein Siebkondensator C7 liegt bei geschlossenem Schalter S3 parallel zur Batterie B1. Der Anschlusspunkt f des integrierten Schaltkreises, der bei geschlossenem Schalter S3 mit dem Minuspol der Batterie verbunden ist, bildet den Schaltungsnullpunkt.

Von den Anschlusspunkten m, n, die an das Klangkorrekturglied des integrierten Schaltkreises 11 geschaltet sind, ist einzig der Anschlusspunkt n mit einem Mittel 30, einer Drahtbrücke oder dem Jumper J1 mit dem Schaltungsnullpunkt verbunden. Dies, weil für den hier genannten vorgesehenen Anwendungsfall praktisch immer ein phasenmoduliertes Empfangssignal zu verarbeiten ist. Der veränderbare Widerstand R1, der am Anschlusspunkt 1 anliegt, dient zum Einstellen der Lautstärke des vom Niederfrequenzverstärker an den Anschlusspunkt k ausgegebenen niederfrequenten Signales, das vom Hörer H1, der zwischen dem zuletzt genannten Anschlusspunkt und dem Pluspol der Batterie geschaltet ist, hörbar gemacht wird. Der Anschlusspunkt k, an den einer der vorher beschriebenen drei Ausgänge des Niederfrequenzverstärkers mündet, weist eine Ausgangsimpedanz auf, die zum Anpassen des Hörers H1 im wesentlichen der Impedanz des Hörers H1 entspricht.

Der Kondensator C8, der mit dem Anschlusspunkt d verbunden ist, ist eine Entkopplungskapazität für den vorher beschriebenen Spannungsvervielfacher.

Den konstruktiven Aufbau eines Miniaturempfängers, der in einem Gehörgang einer Person getragen werden kann, ist aus der Fig. 3 im wesentlichen ersichtlich. Die grössten Elemente innerhalb eines Gehäuses 33, welches im wesentlichen in Form und Grösse einem Gehäuse von einem In-dem-Ohr-Hörgerät entspricht, sind dabei die Batterie B1, der Hörer H1 sowie eine mit der integrierten Schaltung 11, dem Quarz Q1 und den übrigen externen Bauelementen, von denen lediglich die Spulen L1 bis L3 sichtbar sind, bestückten Leiterplatte 34. Obschon hier nicht gezeigt, könnte dieser Empfänger auch mit der vorgenannten elektrisch wirkenden Antenne zusätzlich ausrüstbar ausgeführt sein.

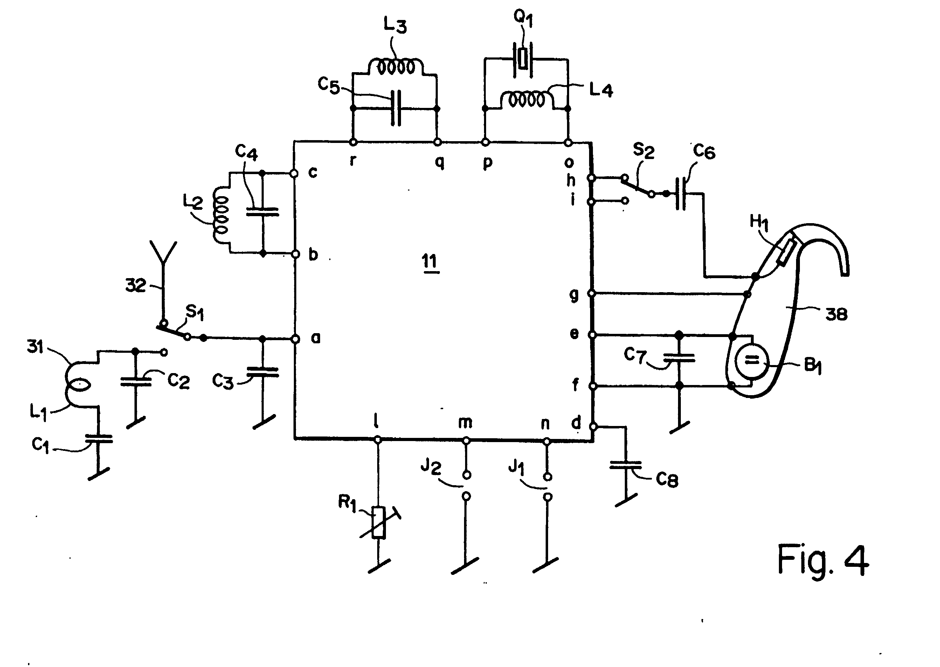

In der Fig. 4 ist eine Schaltung mit dem integrierten Schaltkreis 11 gezeigt, welche einen Miniaturempfänger bildet, der als Zusatz mit einem Hörgerät 38 sowohl mechanisch als auch elektrisch verbindbar ist. Die externen Bauelemente, die mit den Anschlusspunkten b, c, d, e, m, n, o, p, q und r verbunden sind, entsprechen dabei denjenigen, die bereits vorgängig anlässlich der Beschreibung der Figur 2 genannt worden sind und werden hier nicht ein zweites mal beschrieben. Der in diesem Beispiel gezeigte Empfänger wird, wenn er an das Hörgerät 38, in diesem Fall ein hinter dem Ohr zu tragendes Hörgerät, angekoppelt ist, über elektrisch erstellte Verbindungen von der im Hörgerät angeordneten Batterie B1 gespiesen. Die Batterie ist an die bereits vorgängig beschriebenen Anschlusspunkte e und f, über die die Siebkapazität C7 liegt, dauernd angeschaltet. Eine Verbindungsleitung zwischen dem Hörgerät und dem Anschlusspunkt g tastet, wie bereits gesagt, die gesiebte Mikrophonspeisespannung des Hörgerätes ab und sorgt bei einer unterbrochenen Mikrophonspeisespannung für einen Standby-Betrieb des Empfängers. Der Hörer H1, der ebenfalls im Hörgerät 38 angeordnet ist, ist über eine Kopplungskapazität C6 und über einen Schalter S2, entweder mit dem Anschlusspunkt h oder mit dem Anschlusspunkt i der integrierten Schaltung 11 verbunden. Die beiden Anschlusspunkte, an die je ein Niederfrequenzausgang des vorher beschriebenen Niederfrequenzverstärkers geschaltet ist, unterscheiden sich durch eine unterschiedliche Ausgangsimpedanz des Verstärkers. Durch Umlegen des Schalters S2 in die eine oder in die andere Stellung wird dem Hörgeräteträger vorgegeben, dass der Ton, der vom Mikrophon der Hörhilfe herrührt, abgeschwächt ist gegenüber dem Ton, der vom Miniaturempfänger empfangen wird oder dass in der anderen Stellung sowohl der Ton, der vom Mikrophon herrührt, als auch der Ton des Empfängers in etwa gleicher Lautstärke empfangen werden.

Mit einem weiteren Schalter S1 kann von der vorgängig beschriebenen magnetisch wirkenden Antenne 31 auf eine elektrisch wirkende Antenne 32, beispielsweise eine Draht-, Stab- oder Spulenantenne umgeschaltet werden.

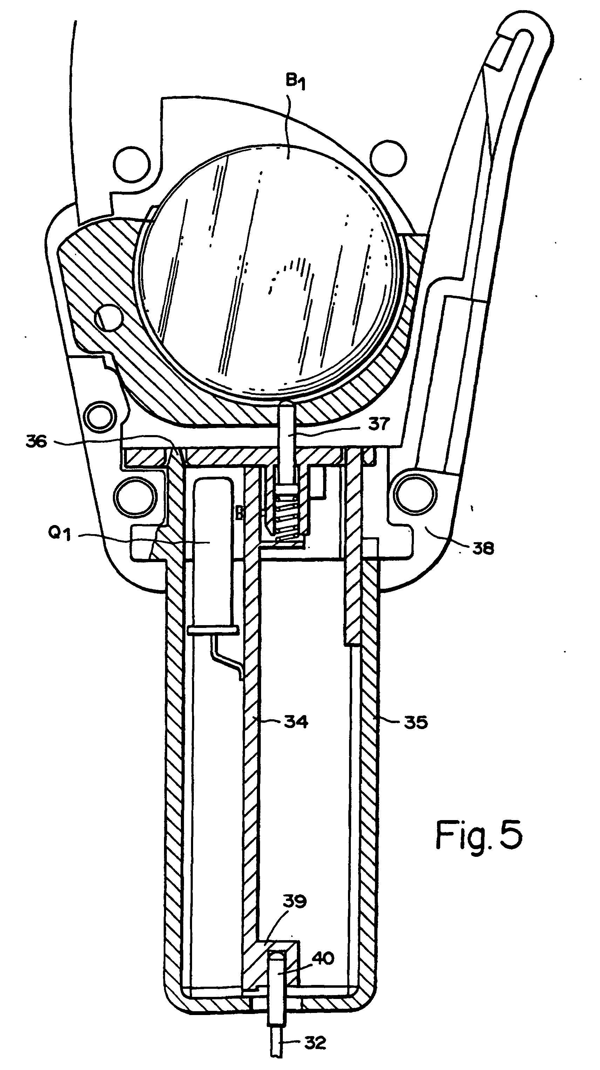

Ein konstruktives Ausführungsbeispiel eines als Hörgerätezusatz konzipierten Empfängers ist aus der Fig. 5 ersichtlich. Mit 38 ist der untere Teil des Gehäuses eines Hinter-dem-Ohr-Hörgerätes, in welchem üblicherweise die Batterie B1 in einer Batterieschublade angeordnet ist, gezeigt. Der Hörgerätezusatz ist in einem separaten Gehäuse 35 untergebracht, welches mittels mechanischen Verbindungsmitteln 36 am Gehäuse 38 des Hörgerätes lösbar befestigbar ist. Die erforderlichen elektrischen Verbindungen zum Hörgerät werden über elektrische Verbindungsmittel 37 hergestellt, wovon in der Fig. 5 lediglich ein federnder Stift, der den Kontakt zum einen Pol der Batterie herstellt, sichtbar ist. Innerhalb des Gehäuses 35 des Empfängers ist die Leiterplatte 34 sichtbar, auf welcher lediglich der Quarz Q1, nicht aber der integrierte Schaltkreis und die übrigen, in der Fig. 4 dargestellten externen Bauelemente gezeichnet ist. An dem dem Hörgerätegehäuse 38 abgewandten Ende des Gehäuses 35 ist eine Oeffnung vorhanden, durch welche die elektrisch wirkende Antenne 32 mit einem Anschlussstift 40 in eine Antennenbuchse 39, welche ebenfalls auf der Leiterplatte 34 montiert ist, einführbar ist. Bei eingeführter elektrisch wirkender Antenne 32 wird die Wirkung der magnetischen Antenne 31 unterbunden.

## Patentansprüche

1. Miniaturempfänger zum Empfangen eines hochfrequenten frequenz- oder phasenmodulierten Signales (1), wobei der Empfänger wenigstens die Module Oszillator (2), Mischstufe (3), die zum Mischen des der Mischstufe zugeführten hochfrequenten modulierten Signales mit einem vom Oszillator zeugten Signal (4) und zum Generieren eines Zwischenfrequenzsignales (5) bestimmt ist, Zwischenfrequenzteil (6), Demodulator (7) sowie Niederfrequenzverstärker (8), an dem ein niederfrequentes Signal (9'') ausgebbar ist, umfasst, und wobei eine elektrische Quelle (10) zum Versorgen der obengenannten Module (2, 3, 6, 7, 8) mit elektrischer Energie vorhanden ist, und wobei die obengenannten Module (2, 3, 6, 7, 8) in höchstens zwei integrierten Schaltkreisen enthalten sind, **dadurch gekennzeichnet, dass** diejenigen der obengenannten Module (2, 3, 6, 7, 8) welche in einem niederfrequenten Frequenzbereich arbeiten in CMOS Technik ausgeführt sind, und dass auf einem der höchstens zwei integrierten Schaltkreise eine Spannungsvervielfacherschaltung (15) vorhanden ist, wobei bestimmte der obengenannten Module (2, 3, 6, 7, 8) mit einer höheren Spannung als derjenigen der elektrischen Energiequelle gespiesen sind, und dass die elektrische Energiequelle eine einzellige Batterie (10) oder ein einzelliger Akkumulator (10) ist.

2. Empfänger nach Anspruch 1, **dadurch gekennzeichnet, dass** in den höchstens zwei integrierten Schaltkreisen (11) zusätzlich ein Hochfrequenzverstärkermodul (12) oder ein Tiefpassfiltermodul (13) oder ein Muting- bzw. Squelchmodul (14), vorzugsweise mehrere oder alle diese Module (12, 13, 14), enthalten sind.

3. Empfänger nach Anspruch 1 oder 2, **dadurch gekennzeichnet, dass** die im hohen Frequenzbereich arbeitenden Module (2, 3, 12) in bipolarer Technologie integriert sind, während die im mittleren oder niedrigen Frequenzbereich arbeitenden Module (6, 7, 8, 13, 14) in CMOS-Technologie integriert sind.

4. Empfänger nach einem der Ansprüche 1 bis 3, **dadurch gekennzeichnet, dass** die Spannung der elektrischen Energiequelle (10) höchstens 1,8 Volt beträgt, wobei die elektrische Energiequelle vorzugweise eine handelsübliche Hörgerätebatterie ist.

5. Empfänger nach einem der Ansprüche 1 bis 4, **dadurch gekennzeichnet, dass** alle die genannten Module (2, 3, 6, 7, 8, 12, 13, 14, 15) auf einem einzigen integrierten Schaltkreis (11) vorhanden sind.

6. Empfänger nach einem der Ansprüche 1 bis 5, **dadurch gekennzeichnet, dass** Mittel (30) zum Anpassen der Demodulationsart entweder an ein frequenzmoduliertes Signal oder an ein phasenmoduliertes Signal, vorhanden sind.

7. Empfänger nach einem der Ansprüche 1 bis 6, **dadurch gekennzeichnet, dass** eine magnetisch wirkende Antenne (31) oder eine elektrisch wirkende Draht-, Stab- oder Spulenantenne (32), vorzugsweise beide Antennen (31, 32) umschaltbar, vorhanden sind.

8. Empfänger nach einem der Ansprüche 1 bis 7, **dadurch gekennzeichnet, dass** sämtliche Komponenten, mit denen der Zwischenfrequenzteil (6) realisiert ist, in dem einen der höchstens zwei integrierten Schaltkreise (11) integriert sind.

9. Empfänger nach einem der Ansprüche 2 bis 8, **dadurch gekennzeichnet, dass** Mittel (21) zum Anpassen der Bandbreite des Tiefpassfilters (24) an die Grösse des empfangenen hochfrequenten Signales (1), vorzugsweise in fest vorgegebenen Stufen, vorhanden sind.

10. Empfänger nach einem der Ansprüche 1 bis 9, **dadurch gekennzeichnet, dass** er konstruktiv derart gestaltet ist, dass der bzw. die integrierte(n) Schaltkreis(e) (11), eine Hörgerätebatterie (B1), sämtliche zum Aufbau des Empfängers zusätzlich erforderlichen diskreten Bauelemente (Ln, Cn, Rn, Qn, Jn, Sn), eine magnetisch wirkende Antenne (31) sowie ein ein akustisches Signal erzeugendes Organ (H1) in einem in einen Gehörgang einer Person einsetzbaren Gehäuse (33) untergebracht sind.

11. Empfänger nach einem der Ansprüche 1 bis 10, **dadurch gekennzeichnet, dass** er konstruktiv derart gestaltet ist, dass der bzw. die integrierte(n) Schaltkreis(e) (11), zum Aufbau des Empfängers zusätzlich erforderliche diskrete Bauelemente (Ln, Cn, Rn, Qn, Jn, Sn) sowie eine magnetisch wirkende Antenne (31) in einem Gehäuse (35) untergebracht sind, wobei am Gehäuse (35) Verbindungsmittel (36, 37) zum mechanischen (36) und elektrisch (37) funktionellen Verbinden des Empfängers mit einem Hörgerät (38) vorhanden sind, derart, dass mit dem Hörgerät das niederfrequente Signal des Empfängers hörbar ist.

12. Empfänger nach Anspruch 10 oder 11, **dadurch gekennzeichnet, dass** von aussen des Gehäuses (33, 35) eine elektrisch wirkende Antenne (32) lösbar anbringbar ist, wobei im angebrachten Zustand die Funktion der im Gehäuse (33, 35) angeordneten magnetisch wirkenden Antenne (31) unterbunden ist.

13. Empfänger nach Anspruch 11, **dadurch gekennzeichnet, dass** auf dem bzw. einem der integrierten Schaltkreis(e) ein Standby-Stromkreis (17) vorhanden ist, wobei bei einem ausgeschalteten Hörgerät (38) der Empfänger durch einen Standby-Betrieb im wesentlichen ebenfalls stromlos ist.

## Claims

1. Miniature receiver for receiving a high-frequency frequency-modulated or phase-modulated signal (1), the receiver comprising at least the modules oscillator (2), mixer (3), which is intended for mixing the high-frequency modulated signal, supplied to the mixer, with a signal (4) generated by the oscillator and for generating an intermediate frequency signal (5), intermediate-frequency section (6), demodulator (7) and low frequency amplifier (8), at which a low frequency signal (9") is able to be emitted, and there being an electrical source (10) for supply of the above-mentioned modules (2, 3, 6, 7, 8) with electrical energy, and the above-mentioned modules (2, 3, 6, 7, 8) being contained in at most two integrated circuits, **characterised in that** those of the above-mentioned modules (2, 3, 6, 7, 8) which operate in a low-frequency frequency range are implemented in CMOS technology, and **in that** on one of the at most two integrated circuits there is a voltage multiplier, certain of the above-mentioned modules (2, 3, 6, 7, 8) being fed with a higher voltage than that of the electrical energy source, and **in that** the electrical energy source is a single battery (10) or a single-cell accumulator (10).

2. Receiver according to claim 1, **characterised in that** additionally contained in the at most two integrated circuits (11) are a high-frequency amplifier module (12) or a low pass filter module (13) or a muting or respectively squelch module (14), preferably a plurality of, or all of, these modules (12,13, 14).

3. Receiver according to claim 1 or 2, **characterised in that** the modules operating in high frequency range (2, 3, 12) are integrated in bipolar technology, while the modules (6, 7, 8, 13, 14) operating in medium or low frequency range are integrated in CMOS technology.

4. Receiver according to one of the claims 1 to 3, **characterised in that** the voltage of the electrical energy source (10) is at most 1.8 volts, the electrical energy source being preferably a commercially available hearing aid battery.

5. Receiver according to one of the claims 1 to 4, **characterised in that** all the said modules (2, 3, 6, 7, 8, 12, 13, 14, 15) are present on a single integrated circuit (11).

6. Receiver according to one of the claims 1 to 5, **characterised in that** there are means (30) for adapting the demodulation type either to a frequency-modulated signal or a phase-modulated signal.

7. Receiver according to one of the claims 1 to 6, **characterised in that** present are a magnetically operating antenna (31) or an electrically operating wire antenna, rod antenna or loop antenna (32), preferably both antennas switchable.

8. Receiver according to one of the claims 1 to 7, **characterised in that** all components with which the intermediate-frequency section (6) is achieved are integrated in one of the at most two integrated circuits (11).

9. Receiver according to one of the claims 2 to 8, **characterised in that** there are means (21) for adapting the bandwidth of the low pass filter (24) to the magnitude of the received high frequency signal (1), preferably in fixed, prescribed stages.

10. Receiver according to one of the claims 1 to 9, **characterised in that** it is structurally designed such that the integrated circuit or circuits (11), a hearing aid battery (B1), all discrete components (Ln, Cn, Rn, Qn, Jn, Sn) additionally required for construction of the receiver, a magnetically operating antenna (13) as well as an element (H1) generating an acoustic signal are accommodated in a housing (33) insertable into an external auditory canal of a person.

11. Receiver according to one of the claims 1 to 10, **characterised in that** it is structurally designed such that the integrated circuit or circuits (11), discrete components (Ln, Cn, Rn, Qn, Jn, Sn) additionally required for construction of the receiver, and a magnetically operating antenna (31) are accommodated in a housing (35), whereby there being connecting means (36, 37) on the housing (35) for mechanical (36) and electrical (37) functional connection of the receiver to a hearing aid (38) in such a way that the low frequency signal of the receiver is audible with the hearing aid.

12. Receiver according to one of the claims 10 or 11, **characterised in that** an electrically operating antenna (32) is detachably installable from outside the housing (33, 35), in installed state the operation of the magnetically operating antenna (31) disposed in the housing (33, 35) being stopped.

13. Receiver according to claim 11, **characterised in that** on the integrated circuit or on one of the integrated circuits there is a standby circuit (17), the receiver also being substantially without current from standby operation when the hearing aid (38) is turned off.

## Revendications

1. Récepteur miniature pour la réception d'un signal radiofréquence modulé en fréquence ou en phase (1), le récepteur comprenant au moins les modules oscillateurs (2), palier mixte (3) qui est destiné au mélange du signal modulé haute fréquence amené au palier mixte et d'un signal (4) généré par l'oscillateur et à la génération d'un signal de fréquence intermédiaire, comprenant une partie de fréquence intermédiaire (6), un démodulateur (7) ainsi qu'un amplificateur basse fréquence auquel peut être édité un signal basse fréquence (9") et une source électrique (10) pour l'alimentation des modules précités (2, 3, 6, 7, 8) en énergie électrique étant prévue et les modules précités (2, 3, 6, 7, 8) étant contenus dans au plus deux circuits intégrés, **caractérisé en ce que** les modules précités (2, 3, 6, 7, 8) qui travaillent dans une plage à basses fréquences sont réalisés selon la technique CMOS et **en ce que** sur l'un des au plus deux circuits intégrés, il est prévu un circuit d'amplification de tension (15), certains des modules précités (2, 3, 6, 7, 8) étant alimentés d'une tension plus élevée que celle de la source électrique et **en ce que** la source électrique est une batterie monocellulaire (10) ou un accumulateur monocellulaire (10).

2. Récepteur selon la revendication 1, **caractérisé en ce que** dans au moins les deux circuits intégrés (11), il est compris en plus un module amplificateur haute fréquence (12) ou un module de filtre passe-bas (13) ou un module de réglage siliencieux ou de blocage automatique (14), de préférence plusieurs ou tous ces modules (12, 13, 14).

3. Récepteur selon la revendication 1 ou 2, **caractérisé en ce que** les modules (2, 3, 12) travaillant dans la plage des hautes fréquences sont intégrés dans la technologie bipolaire tandis que les modules (6, 7, 8, 13, 14) travaillant dans la plage des moyennes et basses fréquences sont intégrés dans la technologie CMOS.

4. Récepteur selon l'une de revendication 1 à 3, **caractérisé en ce que** la tension de la source d'énergie électrique (10) s'élève au plus à 1,8 volt, la source d'énergie électrique étant de préférence une pile d'appareils auditifs courants dans le commerce.

5. Récepteur selon l'une de revendication 1 à 4, **caractérisé en ce que** tous les dits modules (2, 3, 6, 7, 8, 12, 13, 14, 15) se trouvent sur un seul circuit intégré (11).

6. Récepteur selon l'une des revendications 1 à 5, **caractérisé en ce qu'**il est prévu des moyens (30) pour l'adaptation du mode de modulation soit à un signal modulé en fréquence soit à un signal modulé en phase.

7. Récepteur selon l'une des revendications 1 à 6, **caractérisé en ce qu'**il est prévu une antenne magnétique (31) ou une antenne tige ou en bobine ou filaire (32) de préférence les deux antennes (31, 32) sont commutables.

8. Récepteur selon l'une des revendications 1 à 7, **caractérisé en ce que** différents composants avec lesquels est réalisée la partie de fréquence intermédiaire (6) sont intégrés dans l'un des deux circuits intégrés (11).

9. Récepteur selon l'une des revendications 2 à 8, **caractérisé en ce qu'**il est prévu des moyens (21) pour l'adaptation de la largeur de bande du filtre passe bas (24) à la taille du signal haute fréquence reçu (1) de préférence dans des plages prédéterminées.

10. Récepteur selon l'une des revendications 1 à 9, **caractérisé en ce qu'**il est configuré de sorte que le respectivement les circuits intégrés (11), une pile d'écouteur (B1), des éléments discrets nécessaires à la construction du récepteur (Ln, Cn, Qn, Jn, Sn), une antenne magnétique (31) ainsi qu'un organe (H₁) générant un signal acoustique sont logés dans un boîtier (33) pouvant être introduit dans un conduit auditif d'une personne.

11. Récepteur selon l'une des revendications 1 à 10, **caractérisé en ce qu'**il est configuré de sorte que le respectivement les circuits intégrés (11), une pile d'écouteur (B1), des éléments discrets nécessaires à la construction du récepteur (Ln, Cn, Qn, Jn, Sn), une antenne magnétique (31) sont logés dans un boîtier (35), le boîtier (35) contenant des moyens de liaison (36, 37) pour la liaison fonctionnelle mécanique (36) et électrique (37) du récepteur à un appareil auditif (38) de sorte que le signal basse fréquence du récepteur est audible avec l'appareil auditif.

12. Récepteur selon la revendication 10 ou 11, **caractérisé en ce que** de l'extérieur du boîtier (33, 35) il est possible d'apposer de manière amovible une antenne électrique (32), à l'état monté, la fonction de l'antenne magnétique (31) disposée dans le boîtier (33, 35) étant inhibée.

13. Récepteur selon la revendication 11, **caractérisé en ce que** sur le ou l'un des circuits intégrés, il est prévu un circuit de courant électrique de veille (17) dans le cas d'un appareil auditif (38), le récepteur étant également sensiblement sans courant par un mode de veille.
